# EUROPÄISCHE PATENTSCHRIFT

(11) **EP 2 054 253 B1**
(45) Veröffentlichungstag und Bekanntmachung des Hinweises auf die Patenterteilung: **12.05.2010**
(21) Anmeldenummer: 07786412.2
(22) Anmeldetag: 20.07.2007
(51) Int. Cl.: B60J 5/04, F16B 5/02

(54) **AGGREGATETRÄGER ZUM EINBAU IN EINE TÜRSTRUKTUR EINER KRAFTFAHRZEUGTÜR**
UNIT CARRIER FOR FITTING INTO A DOOR STRUCTURE OF A MOTOR VEHICLE DOOR
SUPPORT D'EQUIPEMENTS A INSTALLER DANS UNE STRUCTURE DE PORTE DE VEHICULE AUTOMOBILE

(30) Priorität: 11.08.2006 DE 202006012577 U
(43) Veröffentlichungstag der Anmeldung: 06.05.2009
(73) Patentinhaber: Brose Fahrzeugteile GmbH & Co. KG, Coburg, 96450 Coburg (DE)
(72) Erfinder: SALHOFF, Thomas, 96103 Hallstadt (DE)
(74) Vertreter: Baumgärtel, Gunnar
(86) Internationale Anmeldenummer: PCT/EP2007/006702
(87) Internationale Veröffentlichungsnummer: WO 2008/017395

(56) Entgegenhaltungen:
- EP-A- 1 096 156
- WO-A-01/85477
- DE-A1- 10 201 651
- DE-A1- 19 534 034
- US-A1- 2003 097 798

## Beschreibung

Die Erfindung betrifft einen Aggregateträger zum Einbau in eine Türstruktur einer Kraftfahrzeugtür nach dem Oberbegriff des Anspruchs 1.

Ein Aggregateträger zum Einbau in eine Türstruktur einer Kraftfahrzeugtür ist aus der US 2003/0097798 A1 bekannt.

An einem derartigen Aggregateträger sind Funktionskomponenten einer Kraftfahrzeugtür, wie z. B. ein Fensterheber, eine Schlossbaugruppe, ein Airbagmodul, ein Lautsprecher und dergleichen vormontierbar, so dass der Aggregateträger zusammen mit den hieran vormontierten Funktionskomponenten als komplettes und gegebenenfalls vorgeprüftes Türmodul in die Türstruktur eingebaut werden kann.

Die Türstruktur, die zum Einbau des Aggregateträgers vorgesehen ist, kann beispielsweise eine Türinnenhaut mit einem großflächigen Ausschnitt umfassen, welcher vom Aggregateträger im eingebauten Zustand überdeckt wird. Der Aggregateträger liegt dann mit seiner einen, türstrukturseitigen Oberfläche entlang des Randes des großflächigen Ausschnittes an der Türstruktur, genauer der Türinnenhaut, an und ist über Befestigungselemente, die von der türstrukturseitigen Oberfläche des Aggregateträgers abstehen und in zugeordnete Befestigungsstellen der Türstruktur, also insbesondere in Befestigungsstellen am Rand des großflächigen Ausschnittes einer Türinnenhaut, eingreifen, fixiert. Hierdurch ist der Aggregateträger an der Türstruktur festgelegt.

Hierzu ist es bekannt, einander zugeordnete Befestigungsstellen am Aggregateträger einerseits und an der Türstruktur andererseits zur Überdeckung zu bringen und anschließend den Aggregateträger an jenen Befestigungsstellen mit der Türstruktur zu verbinden, etwa durch Befestigungsschrauben, die einander zugeordnete Befestigungsstellen am Aggregateträger einerseits und an der Türstruktur andererseits durchgreifen. Weiterhin können als Befestigungselemente auch Clipselemente oder Spreizelemente, insbesondere in Form von Dübeln, verwendet werden.

Im Rahmen einer Zusammenfassung möglichst vieler Funktionskomponenten einer Kraftfahrzeugtür ist es wünschenswert, Befestigungselemente, die zur Befestigung des Aggregateträgers an der Türstruktur verwendet werden, bereits vorab am Aggregateträger vorzumontieren, so dass der Aggregateträger zusammen mit den Befestigungselementen auf die Türstruktur aufgesetzt werden kann und die aggregateträgerseitigen Befestigungsmittel mit türstrukturseitigen Befestigungsstellen in Eingriff gebracht werden können.

Hierbei besteht jedoch das Problem, dass ein Aggregateträger beim Einbau in eine Kraftfahrzeugtür regelmäßig nicht einfach senkrecht zur Türebene auf die Türstruktur aufgesetzt werden kann, sondern dass häufig eine Bewegung des Aggregateträgers entlang der Türebene erforderlich ist, um beim Einbau des Aggregateträgers eine am Aggregateträger vormontierte Schlossbaugruppe in ihre Funktionsposition an der Türstruktur überführen zu können.

In der EP 1 096 156 A2 wird mittels eines vormontierten Befestigungselementes ein Gegenstand an einer Befestigungsfläche befestigt. Das Befestigungselement wird in einer Montageposition mittels einer Dämpfungsmuffe unverlierbar an dem zu befestigenden Gegenstand gehalten.

Der Erfindung liegt daher das Problem zugrunde, einen Aggregateträger der eingangs genannten Art zu schaffen, der bei einer hohen Integration von Funktionskomponenten einer Kraftfahrzeugtür gleichzeitig einen einfachen Einbau in eine Türstruktur gestattet.

Dieses Problem wird erfindungsgemäß durch die Schaffung eines Aggregateträgers mit den Merkmalen des Anspruchs 1 gelöst.

Danach werden die Befestigungselemente, die zur Befestigung des Aggregateträgers an einer Türstruktur dienen, vor dem Einbau des Aggregateträgers in die Türstruktur derart in einer Montageposition am Aggregateträger gehalten, dass sie nicht von der türstrukturseitigen (also der Türstruktur zugewandten) Oberfläche des Aggregateträgers abstehen, wobei den Befestigungselementen am Aggregateträger jeweils ein Durchgang zugeordnet ist, durch den hindurch das jeweilige Befestigungselement aus seiner Montageposition in eine Befestigungsposition bringbar ist, in der es von der türstrukturseitigen Oberfläche des Aggregateträgers absteht, so dass es mit einer zugeordneten Befestigungsstelle der Türstruktur in Eingriff ist. Dabei sind auf der der türstrukturseitigen Oberfläche abgewandten zweiten Oberfläche des Aggregateträgers angeformte Führungsbereiche vorgesehen, die zur Aufnahme zumindest eines Abschnittes je eines der Befestigungselemente in seiner Montageposition dienen.

Die erfindungsgemäße Lösung ermöglicht also eine Vormontage von Befestigungselementen, die zur Befestigung des Aggregateträgers an einer Türstruktur dienen, am Aggregateträger, ohne dass diese Befestigungselemente, die in ihrer Befestigungsposition von der türstrukturseitigen Oberfläche des Aggregateträgers abstehen, den Einbau des Aggregateträgers in eine Türstruktur erschwerten, insbesondere auch dann nicht, wenn der Aggregateträger beim Einbau in die Türstruktur entlang der Türebene bewegt werden muss. Denn die Befestigungselemente befinden sich zunächst in einer Montageposition am Aggregateträger, in der sie nicht von der türstrukturseitigen Oberfläche des Aggregateträgers abragen.

Bevorzugt werden die Befestigungselemente jeweils am Rand des zugeordneten Durchganges in ihrer jeweiligen Montageposition gehalten, wobei die Halterung derart ist, dass sie bei Einwirkung hinreichend großer Kräfte durch eine axiale Bewegung und/oder Drehbewegung des jeweiligen Befestigungselementes aufhebbar ist, so dass das Befestigungselement durch eine axiale Bewegung, eine Drehbewegung oder eine Kombination dieser beiden Bewegungen in seine Befestigungsposition überführbar ist, in der es mit einer zugeordneten Befestigungsstelle der Türstruktur in Eingriff steht.

Gemäß einer Ausführungsform der Erfindung sind die Befestigungselemente jeweils formschlüssig am zugeordneten Durchgang gehalten, und zwar insbesondere mittels einer Rastverbindung, die zumindest teilweise elastisch ausgebildet ist, so dass die Rastverbindung durch Einwirkung auf das jeweilige Befestigungselement beim Befestigen des Aggregateträgers an einer Türstruktur lösbar ist. Eine jeweilige Rastverbindung kann beispielsweise durch einen (von der Wand eines jeweiligen Durchganges nach innen abstehenden) Rastvorsprung gebildet werden, der in eine zugeordnete Rastausnehmung (am jeweiligen Befestigungselement) eingreift, wobei durch eine elastische Ausbildung des Rastvorsprunges ein Lösen der Rastverbindung bei Einwirkung hinreichend großer Kräfte möglich ist.

Nach einer anderen Ausführungsform der Erfindung ist das jeweilige Befestigungselement in seiner Montageposition in den zugeordneten Durchgang eingepresst, so dass es reibschlüssig an diesem gehalten wird.

In einer weiteren Ausführungsform der Erfindung kann vorgesehen sein, dass die Befestigungselemente jeweils stoffschlüssig am Rand des zugeordneten Durchganges gehalten werden, z. B. durch ein Klebemittel oder durch Schweißstellen (Ultraschallschweißen).

Schließlich kann ein jeweiliges Befestigungselement auch einstückig am Rand des zugeordneten Durchganges einstückig angeformt sein, z. B. im Fall eines aus Kunststoff bestehenden Aggregateträgers angespritzt sein.

Die Führungsbereiche werden bevorzugt durch jeweils mindestens eine ringförmig umlaufende (aber nicht notwendig ununterbrochen durchgehende) Begrenzungswand gebildet, die einen zur Aufnahme eines zugeordneten Befestigungselementes vorgesehenen Raum umschließen.

Sofern die Führungsbereiche von der der türstrukturseitigen Oberfläche abgewandten zweiten Oberfläche des Aggregateträgers abstehen, weisen die zugeordneten Befestigungselemente, z. B. an ihrem Betätigungskopf, bevorzugt eine Aussparung auf, die zur Aufnahme des Führungsbereiches dient, wenn sich das jeweilige Befestigungselement in seiner Befestigungsposition befindet.

Die Führungsbereiche bilden jeweils einen Bestandteil der Durchgänge, in denen jeweils ein Befestigungselement in seiner Montageposition aufzunehmen ist. Hierzu fluchtet jeder der Führungsbereiche mit einer Durchtrittsöffnung des Aggregateträgers, so dass die jeweilige Durchtrittsöffnung zusammen mit dem zugeordneten Führungsbereich einen Durchgang für ein Befestigungselement bildet.

Die Befestigungselemente sind bevorzugt derart ausgebildet, dass sie in ihrer Befestigungsposition in je eine zugeordnete Befestigungsöffnung der Türstruktur eingreifen, wenn der Aggregateträger in die Türstruktur eingebaut ist, und zwar bevorzugt in der Weise, dass die Befestigungselemente zur Herstellung einer Verbindung die jeweils zugeordnete Befestigungsöffnung am Rand übergreifen.

Hierzu können die Befestigungselemente beispielsweise als aufspreizbare Elemente in Form von Dübeln ausgebildet sein, die durch ein zugeordnetes Betätigungselement, z. B. in Form einer Betätigungsschraube oder eines Stiftes, aufspreizbar sind. Die Betätigungselemente können dabei bereits am jeweiligen aufspreizbaren Element vormontiert sein, wenn sich dieses noch in seiner Montageposition befindet.

Andererseits können die Befestigungselemente so ausgestaltet sein, dass sie durch eine Drehbewegung, gegebenenfalls unter Überlagerung einer Längsbewegung, aus ihrer Montageposition in ihre Befestigungsposition bringbar sind, um sie mit türstrukturseitigen Befestigungsstellen in Eingriff zu bringen.

Wenn an der Türstruktur nicht rotationssymmetrische Befestigungsöffnungen, z. B. in Form von Schlitzen, vorgesehen sind, dann können die drehbaren Befestigungselemente zur Bildung eines Bajonettverschlusses ausgebildet sein, indem sie durch eine Drehbewegung aus einer ersten Drehlage, in der sie mit einem Befestigungsabschnitt in Form eines Verschlusskopfes durch die zugeordnete Befestigungsöffnung hindurchgeführt werden können, in eine andere Drehlage bringbar sind, in der sie die zugeordnete Befestigungsöffnung mit dem Verschlusskopf am Rand übergreifen.

In einer Weiterbildung der Erfindung sind Mittel zur Verhinderung einer Drehbewegung der Befestigungselemente in ihrer Befestigungsposition vorgesehen. Hierdurch soll sichergestellt werden, dass die Befestigungselemente, nachdem sie in ihre Befestigungsposition überführt wurden, auch in dieser verbleiben. Hierzu können beispielsweise einander zugeordnete Anschläge am jeweiligen Befestigungselement einerseits sowie an der Wand des zugeordneten Durchganges andererseits dienen.

Bevorzugt ist zumindest ein Teil der Anschläge elastisch ausgebildet, so dass bei Einwirkung eines hinreichend großen Drehmomentes die Anschläge überwunden und eine Drehbewegung der Befestigungselemente herbeigeführt werden kann, etwa um den Aggregateträger in einem Reparatur- bzw. Service-Fall von der Türstruktur lösen zu können.

Weitere Einzelheiten und Vorteile der Erfindung werden bei der nachfolgenden Beschreibung von Ausführungsbeispielen anhand der Figuren deutlich werden.

Es zeigen:
- Fig. 1a: einen Ausschnitt eines Aggregateträgers zum Einbau in eine Kraftfahrzeugtür im Bereich eines Befestigungselementes, das zur Befestigung des Aggregateträgers an einer Türstruktur vorgesehen ist, in einer Schnittdarstellung;
- Fig. 1b: einen Querschnitt durch das Befestigungselement aus Figur 1a;
- Fig. 2: eine Darstellung gemäß Figur 1a nach Befestigung des Aggregateträgers an einer Türstruktur;
- Fig. 3a: eine Abwandlung der Anordnung aus Figur 1a;
- Fig. 3b: einen Längsschnitt durch die Anordnung aus Figur 3a;
- Fig. 4: eine Darstellung gemäß Figur 3a nach Befestigung des Aggregateträgers an einer Türstruktur;
- Fig. 5a: eine zweite Ausführungsform einer Anordnung gemäß Figur 1 a;
- Fig. 5b: eine erste Ansicht der Anordnung aus Figur 5a;
- Fig. 5c: eine zweite Ansicht der Anordnung aus Figur 5a;
- Fig. 6a: die Anordnung aus Figur 5a nach Befestigung des Aggregateträgers an einer Türstruktur;
- Fig. 6b: eine erste Ansicht der Anordnung aus Figur 6a;
- Fig. 6c: eine zweite Ansicht der Anordnung aus Figur 6a;
- Fig. 7: eine erste Abwandlung der Anordnung aus den Figuren 3a bis 3c;
- Fig. 8: eine zweite Abwandlung der Anordnung aus den Figuren 3a bis 3c;
- Fig. 9: eine schematische Darstellung einer Türinnenhaut einer Kraftfahrzeugtür sowie eines hieran zu befestigenden Aggregateträgers.

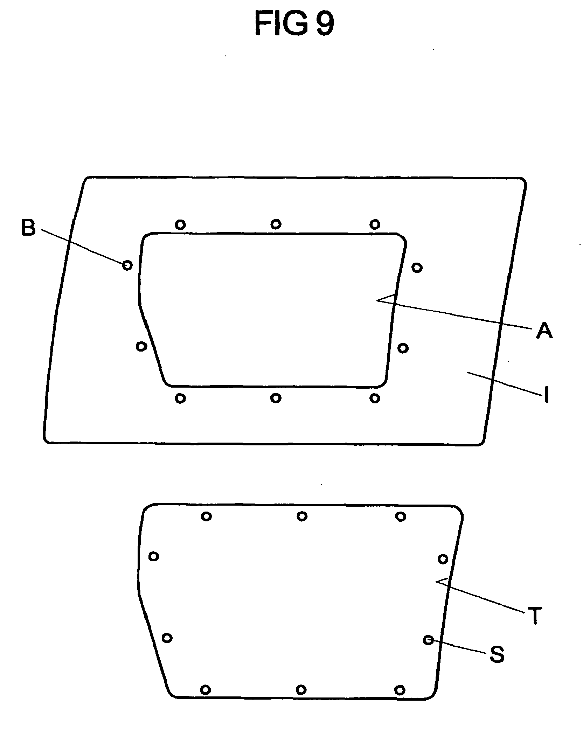

Figur 9 zeigt schematisch eine Türinnenhaut I einer Kraftfahrzeugtür, die mit einem großflächigen Ausschnitt A versehen ist. Eine derartige Türinnenhaut I bildet einen Bestandteil der Türstruktur einer Kraftfahrzeugtür und insbesondere einen Bestandteil einer so genannten Nass-/Trockenraumtrennung, mit der der Nassraum vom Trockenraum der Kraftfahrzeugtür feuchtigkeitsdicht getrennt wird.

Hierzu wird der großflächige Ausschnitt A der Türinnenhaut I mit einem Türmodulträger T überdeckt, der am Rand des großflächigen Ausschnittes A an der Türinnenhaut I anliegt und dort über einander zugeordnete Befestigungsstellen B, S an der Türinnenhaut I einerseits und am Aggregateträger T andererseits mit der Türinnenhaut I verbunden ist.

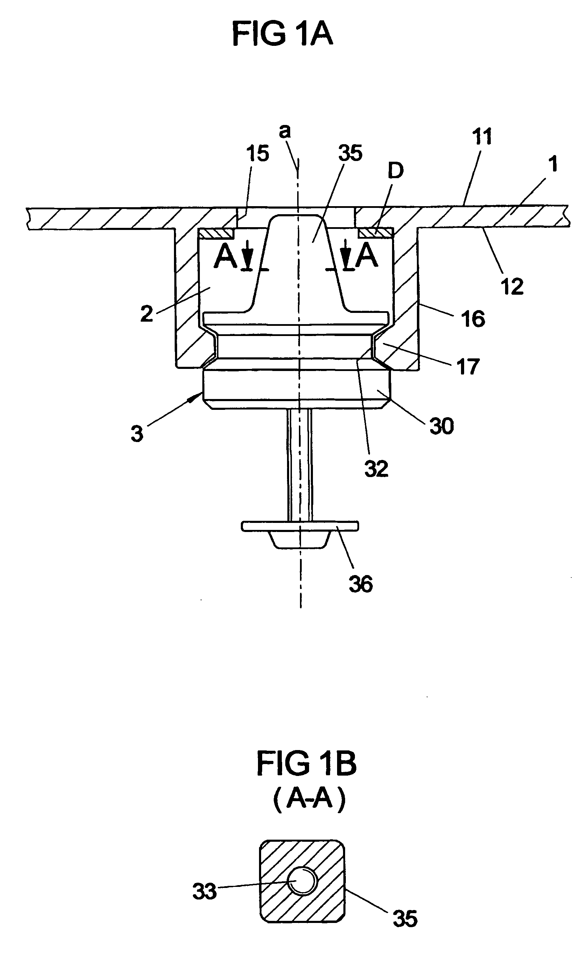

Figur 1a zeigt einen Ausschnitt eines - bevorzugt aus Kunststoff bestehenden - Aggregateträgers 1 für eine Kraftfahrzeugtür der in Figur 9 dargestellten Art, an dem unterschiedliche Funktionskomponenten der Kraftfahrzeugtür, wie z. B. ein Fensterheber, eine Schlossbaugruppe, ein Airbagmodul, ein Lautsprechersystem und dergleichen vormontierbar sind und der zusammen mit den hieran vormontierten Funktionskomponenten als komplett vorgefertigtes und gegebenenfalls auch vorgeprüftes Türmodul in die Türstruktur der zugehörigen Kraftfahrzeugtür einbaubar ist.

Der Aggregateträger 1 weist eine erste türstrukturseitige Oberfläche 11 und eine zweite, hiervon abgewandte Oberfläche 12 auf. Die türstrukturseitige Oberfläche 11 ist im eingebauten Zustand des Aggregateträgers denjenigen Bereichen der Türstruktur zugewandt, an denen der Aggregateträger 1 befestigt wird.

Der Aggregateträger 1 kann beispielsweise an einer so genannten Türinnenhaut einer Kraftfahrzeugtür als einem Bestandteil der Türstruktur befestigt werden. Die Türinnenhaut weist hierzu bevorzugt einen großflächigen Ausschnitt auf, der vom Aggregateträger 1 überdeckt wird, wenn dieser an der Türinnenhaut befestigt ist, wobei die Befestigung des Aggregateträgers 1 an der Türinnenhaut über Befestigungselemente erfolgt, denen Befestigungsstellen entlang des Randes des großflächigen Ausschnittes der Türinnenhaut zugeordnet sind.

Figur 1a zeigt ein (bevorzugt aus Kunststoff bestehendes) Befestigungselement 3 in Form eines spreizbaren Elementes, das zur Befestigung des Aggregateträgers 1 an einer Türstruktur, insbesondere einer Türinnenhaut einer Kraftfahrzeugtür, verwendet werden kann. Das spreizbare Element 3 weist einen Betätigungskopf 30 sowie einen hieran anschließenden Befestigungsabschnitt in Form eines deformierbaren Spreizbereiches 35 auf, der mittels eines vom Betätigungskopf 30 her in das spreizbare Element 3 einführbaren Betätigungselementes 36 in Form einer Betätigungsschraube derart aufspreizbar ist, dass er nach Art eines Dübels mit einer zugeordneten Befestigungsöffnung der Türstruktur (Türinnenhaut) einer Kraftfahrzeugtür zusammenwirken kann.

In dem in Figur 1a gezeigten Zustand befindet sich das Befestigungselement 3 jedoch noch in seiner Montageposition, in der es nicht von der türstrukturseitigen Oberfläche 11 des Aggregateträgers 1 absteht und somit noch nicht in eine zugeordnete Befestigungsöffnung der Türstruktur, insbesondere Türinnenhaut, eingreifen kann. Zur Halterung des Befestigungselementes 3 in seine Montageposition ist auf der zweiten Oberfläche 12 des Aggregateträgers 1 ein Führungsbereich 16 vorgesehen, der durch eine einstückig am Aggregateträger 1 angeformte, von dessen zweiter Oberfläche 12 abstehende Ringwand gebildet wird. Innerhalb des von der Ringwand defnierten (umschlossenen) Raumes ist zumindest ein Teil des Befestigungselementes 3 angeordnet, wobei zur formschlüssigen Halterung des Befestigungselementes 3 in seiner Montageposition mindestens ein Rastvorsprung 17 (z.B. in Form eines Schnapphakens) von der Innenseite der den Führungsbereich 16 definierenden Ringwand nach innen absteht und in mindestens eine zugeordnete Rastausnehmung 32 des Befestigungselementes 3 eingreift.

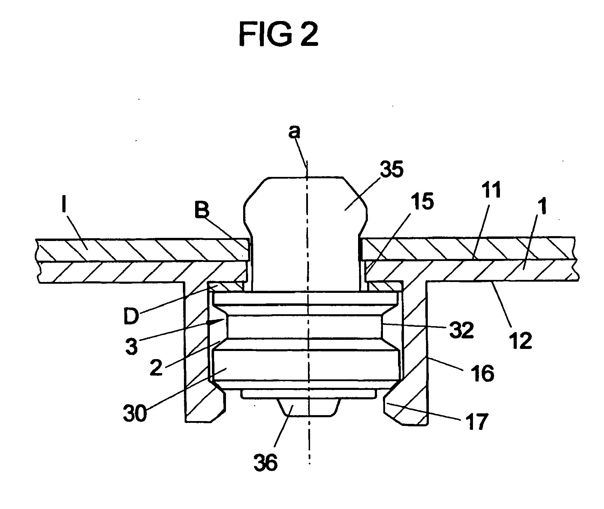

Der Rastvorsprung 17 ist dabei hinreichend elastisch ausgebildet, so dass bei Einwirkung einer Kraft auf das Befestigungselement 3, die einen bestimmten Mindestwert überschreitet, der Rastvorsprung 17 außer Eingriff mit der zugeordneten Rastaussparung 32 bringbar ist und das Befestigungselement 3 aus der in Figur 1a gezeigten Montageposition in die in Figur 2 gezeigte Befestigungsposition überführbar ist.

Die äußere Kontur des Befestigungselementes 3 (an dessen äußerem Umfang) ist dabei gemäß Figur 1b so gewählt, dass das Befestigungselement 3 beim späteren Durchgreifen der Durchtrittsöffnung 15 und einer Befestigungsöffnung B an der Türinnenhaut I einer Türstruktur, vergl. Figur 2 (Befestigungsposition des Befestigungselementes 3), in diesen nicht gedreht werden kann. Hierzu weist die äußere Kontur des Befestigungselementes 3 eine mehreckige Gestalt auf. Die innere Kontur mindestens einer der erwähnten Öffnungen 15, B ist hierauf so abgestimmt, dass das Befestigungselement 3 in Form eines spreizbaren Elementes in seiner Befestigungsposition verdrehsicher hierin gehalten werden kann.

Zur Überführung des Befestigungselementes 3 aus der in Figur 1a gezeigten Montageposition, in der es nicht über die türstrukturseitige Oberfläche 11 des Aggregateträgers 1 hinausragt (oder allenfalls geringfügig hierüber hinausragt), in die in Figur 2 gezeigte Befestigungsposition, in der das Befestigungselement 3 mit seinem Spreizbereich 35 von der türstrukturseitigen Oberfläche 11 des Aggregateträgers 1 absteht und in eine zugeordnete Befestigungsöffnung B an der Türinnenhaut I einer Türstruktur (z.B. in Form eines in Form eines Türinnenblechs) eingreift, dient ein Betätigungselement 36 in Form einer Betätigungsschraube, die bevorzugt als Kunststoffschraube am Befestigungselement 3 vormontiert ist.

Durch Eindrehen der Betätigungsschraube 36 in das Spreizelement 3 wird auf dieses eine Kraft in axialer Richtung a, also entlang der Erstreckungsrichtung des Schraubenschaftes sowie der Mittelachse des Führungsbereiches 16 ausgeübt. Diese Kraft in axialer Richtung a bewirkt ein Lösen der Rastverbindung zwischen dem führungsbereichseitigen Rastvorsprung 17 und der befestigungselementseitigen Rastaussparung 32, so dass das Befestigungselement 3 in axialer Richtung a entlang des Führungsbereiches 16 in Richtung auf die zweite Oberfläche 12 des Aggregateträgers 1 bewegt wird. Hierbei tritt der Spreizbereich 35 des Befestigungselementes 3 durch eine am Aggregateträger 1 vorgesehene, mit dem Führungsbereich 16 fluchtende Durchtrittsöffnung 15 hindurch. Die Durchtrittsöffnung 15 bildet somit zusammen mit dem Führungsbereich 16 einen Durchgang 2 für das Befestigungselement 3, in dem das Befestigungselement 3 aus seiner in Figur 1a gezeigten Montageposition in die in Figur 2 dargestellte Befestigungsposition verschiebbar ist.

Bei der Verschiebung des Befestigungselementes 3 in axialer Richtung a gerät dieses in Anlage mit einem innerhalb des Führungsbereiches 16 angeordneten, ringförmig umlaufenden Dichtungselement D, welches zwischen dem Betätigungskopf 30 des Befestigungselements 3 und der zweiten Oberfläche 12 des Aggregateträgers 1 liegt und von dem Befestigungskopf 30 gegen jene zweite Oberfläche 12 gedrückt wird. Hierdurch wird die Durchtrittsöffnung 15 des Aggregateträgers 1 abgedichtet, so dass keine Feuchtigkeit durch die Durchtrittsöffnung 15 gelangen kann. Dies ist insbesondere dann von Bedeutung, wenn der Aggregateträger 1 zusammen mit der zugeordneten Türinnenhaut I einen Bestandteil einer so genannten Nass-/Trockenraumtrennung einer Kraftfahrzeugtür bildet, die den fahrzeuginnenraumseitigen Trockenraum vom fahrzeugaußenraumseitigen Nassraum einer Kraftfahrzeugtür trennt.

Bei der axialen Verschiebung des Befestigungselementes 3 tritt dieses nicht nur durch die Durchtrittsöffnung 15 des Aggregateträgers 1 hindurch sondern auch durch die hiermit fluchtende Befestigungsöffnung B der Türinnenhaut I, an der der Aggregateträger 1 zu befestigen ist. Hierzu ist der Aggregateträger 1 bei der Montage bezüglich der Türinnenhaut I entsprechend auszurichten.

Ferner wird der Spreizbereich 35 des Befestigungselementes 3 beim Eindrehen der Betätigungsschraube 36 radial aufgespreizt, so dass er die Befestigungsöffnung B in der Türinnenhaut I an ihrem Rand übergreift. Hierdurch steht der Spreizbereich 35 des Befestigungselementes 3 derart mit der durch die Befestigungsöffnung B gebildeten, zugeordneten Befestigungsstelle der Türinnenhaut I in Eingriff, dass der Aggregateträger 1 an dieser Stelle nach dem Dübel-Prinzip an der Türinnenhaut I befestigt ist. Beim Verformen (Aufspreizen) des spreizbaren Bereiches 35 des Befestigungselementes 3 wird außerdem ein Anpressdruck erzeugt, der den Betätigungskopf 30 des Befestigungselementes 3 (unter Zwischenlage der Dichtung D) gegen die zweite Oberfläche 12 des Aggregateträgers 1 drückt.

Durch Befestigung des Aggregateträgers 1 an der Türinnenhaut I an mehreren Stellen gemäß dem in Figur 2 gezeigten Befestigungsprinzip erfolgt eine dauerhafte Fixierung des Aggregateträgers 1 an der Türinnenhaut I.

Vorteilhaft ist, dass beim Einbau des Aggregateträgers 1 in eine Türstruktur in der Anfangsphase der Montage die Befestigungselemente 3 zunächst noch jeweils in der in Figur 1a gezeigten Montageposition angeordnet sind, in der sie nicht von der türstrukturseitigen Oberfläche 11 des Aggregateträgers 1 abstehen. Dies ermöglicht eine freie Verschiebbarkeit des Aggregateträgers 1 bei der Montage entlang der durch die Türinnenhaut I aufgespannten Türebene, etwa um eine am Aggregateträger 1 vormontierte Schlossbaugruppe beim Einbau des Aggregateträgers 1 in die Türstruktur in definierter Weise zu positionieren. Nach erfolgter Ausrichtung des Aggregateträgers 1 bezüglich der Türinnenhaut I werden dann die Befestigungselemente 3, wie anhand der Figuren 1a und 2 beschrieben, aus ihrer in Figur 1a gezeigten Montageposition in die in Figur 2 gezeigte Befestigungsposition überführt, und zwar mittels der hierfür vorgesehenen Betätigungselemente 36 in Form von Betätigungsschrauben.

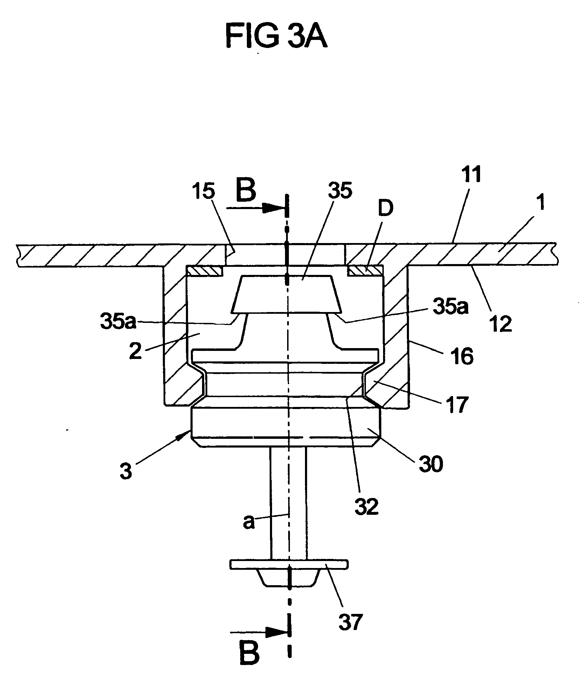

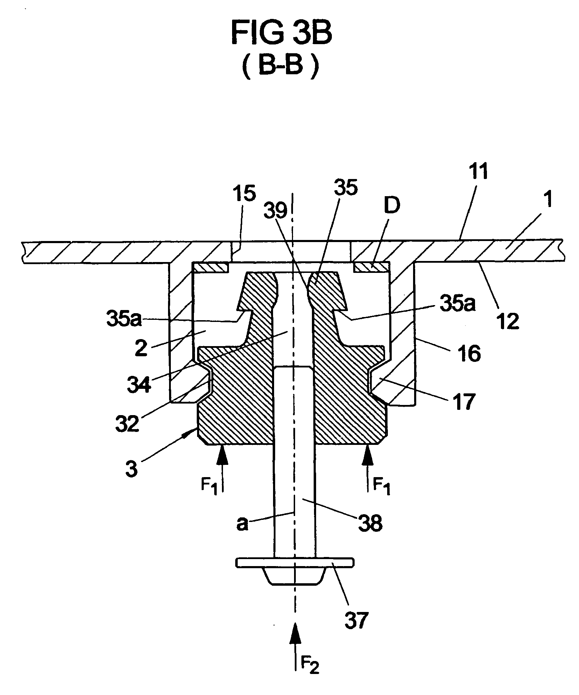

In den Figuren 3a und 3b ist eine Weiterbildung der Anordnung aus den Figuren 1a und 1b dargestellt, die nachfolgend anhand der Unterschiede verglichen mit der Anordnung aus den Figuren 1a und 1b erläutert werden wird.

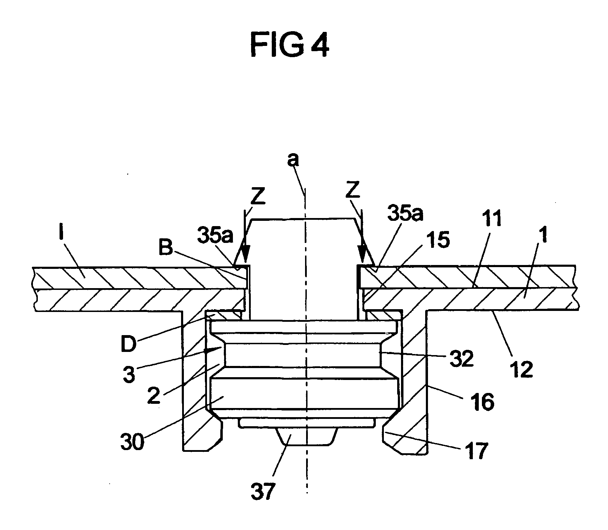

Ein erster Unterschied besteht darin, dass gemäß den Figuren 3a und 3b der Spreizbereich 35 des Befestigungselementes 3 von Anfang an, also bereits vor dessen Deformation durch das zugeordnete Betätigungselement 37, mit mindestens einem Hinterschnitt 35a versehen ist, der dazu ausgebildet und vorgesehen ist, in der in Figur 4 gezeigten Befestigungsposition des Befestigungselementes 3 den Rand einer vom Befestigungselement 3 durchgriffenen Befestigungsöffnung B einer Türinnenhaut I zu hintergreifen.

Ein weiterer Unterschied besteht darin, dass das dem Befestigungselement 3 zugeordnete Betätigungselement 37 nicht als Schraube, sondern als Stift ausgebildet ist, der mit seinem Schaft 38 reibschlüssig an der Innenwand eines im Befestigungselement 3 ausgebildeten, in axialer Richtung a erstreckten Durchganges 34 gehalten wird.

Im Spreizbereich 35 des Befestigungselementes 3 ist die Wandung des Durchganges 34 mit einer nach innen vorspringenden Wölbung 39 versehen, auf die der Schaft 38 des Betätigungselementes 37 bei einer Bewegung in axialer Richtung a derart einwirkt, dass der Spreizbereich 35 in radialer Richtung nach außen, also senkrecht zur axialen Richtung a, aufgespreizt wird.

Zur Überführung des Befestigungselementes 3 aus der in den Figuren 3a und 3b gezeigten Montageposition in die in Figur 4 gezeigte Befestigungsposition - nach Anordnung des Aggregateträgers 1 an eine Türinnenhaut I, wobei die dem Befestigungselement 3 zugeordnete Durchtrittsöffnung 15 des Aggregateträgers 1 mit einer zugeordneten Befestigungsöffnung B der Türinnenhaut I fluchtet - wird zunächst eine Kraft F₁ in axialer Richtung a auf das Befestigungselement 3 ausgeübt. Hierdurch wird, wie bereits anhand der Figuren 1a bis 2 beschrieben, die provisorische Fixierung des Befestigungselementes 3 in seiner Montageposition gelöst, indem der aggregateträgerseitige Rastvorsprung 17 außer Eingriff mit der befestigungselementseitigen Rastaussparung 32 gebracht wird. Dies ermöglicht eine Bewegung des Befestigungselementes 3 (zusammen mit dem hieran reibschlüssig gehaltenen Betätigungselement 37) in axialer Richtung a, bis der Spreizbereich 35 des Befestigungselementes 3 in axialer Richtung a hinter die Befestigungsöffnung B der Türinnenhaut I geführt ist.

Anschließend wird eine Kraft F₂ auf das dem Befestigungselement 3 zugeordnete Betätigungselement 37 ausgeübt, so dass sich dieses in axialer Richtung a in Richtung auf die nach innen vorspringende Wölbung 39 an der Wandung des im Befestigungselement 3 ausgebildeten Durchganges 34 bewegt. Sobald das Betätigungselement 37 mit seinem Schaft 38 mit jener Wölbung 39 in Eingriff tritt, wird der Spreizbereich 35 des Befestigungselementes 3 in radialer Richtung, also senkrecht zur axialen Richtung a, nach außen aufgespreizt, so dass dieses die Befestigungsöffnung B der Türinnenhaut I am Rand übergreift, und zwar konkret mit den bereits am Spreizbereich 35 vorgeformten Hinterschnitten 35a.

Durch die beschriebene Deformation des Spreizbereiches 35 des Befestigungselementes 3, ausgelöst durch das Zusammenwirken des Schaftes 38 des Betätigungselementes 37 mit dem nach innen gewölbten Bereich 39 der Wandung des Durchganges 34 des Befestigungselementes 3, wird auf den Spreizbereich 35 des Befestigungselementes 3 eine Zugkraft Z ausgeübt, welche die die Befestigungsöffnung B an ihrem Rand übergreifenden Abschnitte des Spreizbereiches 35 gegen jenen Rand drückt. Hierdurch wird die Dichtwirkung zum dichten Verschließen der Durchtrittsöffnung 15 und der Befestigungsöffnung B noch verstärkt.

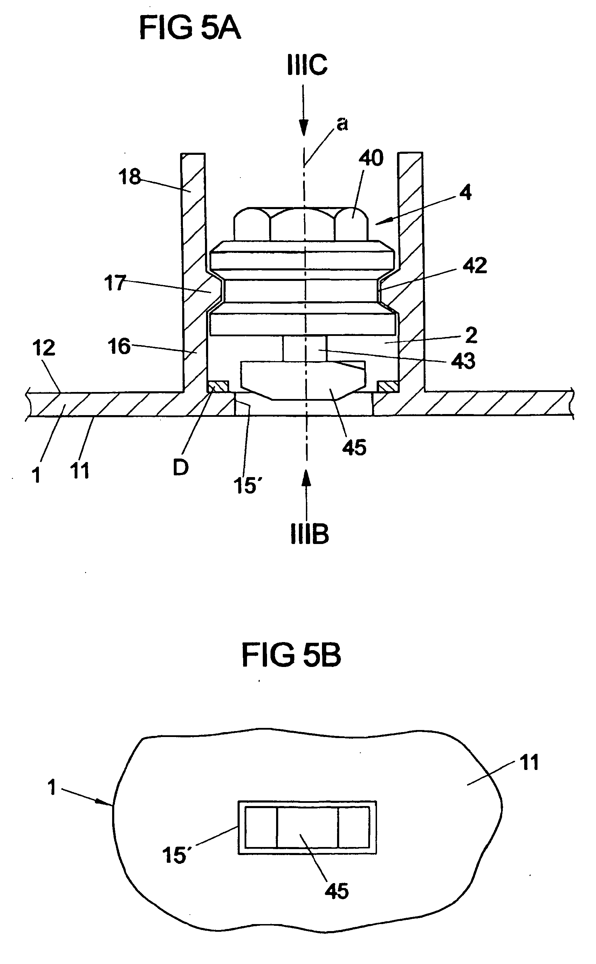

Die Figuren 5a bis 5c zeigen eine weitere Abwandlung der Anordnung aus Figur 1a, und zwar insbesondere hinsichtlich der Ausbildung des Befestigungselementes 4. Nachfolgend wird in erster Linie auf diejenigen Aspekte der Anordnung aus den Figuren 5a bis 5c eingegangen werden, in denen sich diese von der Anordnung gemäß Figur 1a unterscheidet. Im Übrigen wird auf die Beschreibung zu Figur 1a verwiesen, wobei übereinstimmende Komponenten in Figur 1a einerseits sowie den Figuren 5a bis 5c andererseits jeweils mit identischen Bezugszeichen bezeichnet sind.

Gemäß den Figuren 5a bis 5c ist das Befestigungselement 4 ausgebildet zur Herstellung eines Bajonettverschlusses. Hierzu weist dieses einerseits einen Betätigungskopf 40 mit einem Innenmehrkant 40a auf, so dass das Befestigungselement 4 durch Aufbringen eines Drehmomentes mit einem geeigneten, in den Innenmehrkant 40a eingreifenden Werkzeug gedreht werden kann.

An seinem dem Betätigungskopf 40 abgewandten Ende und hiermit über einen Schaft 43 verbunden, weist das Befestigungselement 4 andererseits als Befestigungsbereich einen Befestigungskopf 45 (Verschlusskopf) zur Herstellung eines Bajonettverschlusses auf. Dieser ersetzt im vorliegenden Ausführungsbeispiel den Befestigungsbereich 35 in Form eines Spreizbereiches des Befestigungselementes 3 aus Figur 1 a.

Wie insbesondere anhand Figur 5b erkennbar, ist der Befestigungskopf 45 des Befestigungselementes 4 im Querschnitt rechteckig ausgebildet und ragt in eine im Querschnitt ebenfalls rechteckig ausgebildete Durchtrittsöffnung 15' des Aggregateträgers 1, ohne diese zu durchgreifen, so dass das Befestigungselement 4 nicht über die türstrukturseitige Oberfläche 11 des Aggregateträgers 1 hinausragt. Hierdurch ist das Befestigungselement 4 verdrehsicher im durch die Durchtrittsöffnung 15' und dem Führungsbereich 16 gebildeten Durchgang 2 aufgenommen.

Wie im Fall des Ausführungsbeispieles aus Figur 1a ist auch hier das Befestigungselement 4 formschlüssig in einem von der zweiten Oberfläche 12 des Aggregateträgers 1 abstehenden, einstückig hieran angeformten Führungsbereich 16 gehalten, indem mindestens ein am Führungsbereich 16 angeformter, elastischer Rastvorsprung 17 in mindestens eine zugeordnete Rastaussparung 42 des Befestigungselementes 4 eingreift.

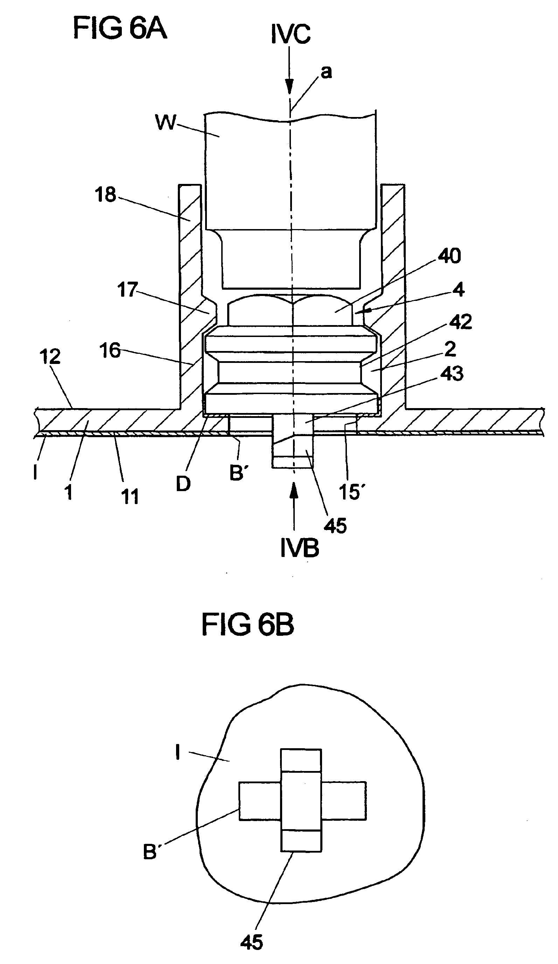

Der Führungsbereich 16 ist im vorliegenden Beispiel in axialer Richtung a - verglichen mit dem Ausführungsbeispiel aus Figur 1a - verlängert, so dass ein Fortsatz 18 des Führungsbereiches 16 zur Führung eines Werkzeuges W, vergleiche Figur 6a, dienen kann, mit dem das Befestigungselement 4 am Betätigungskopf 40 zu betätigen ist.

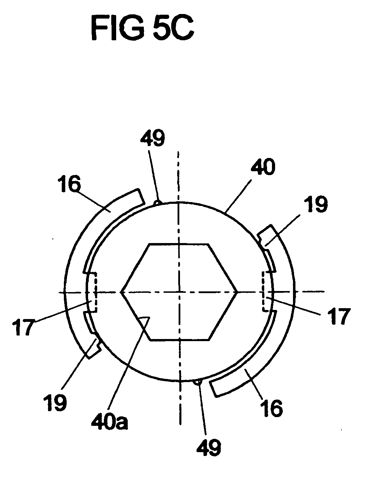

Anhand Figur 5c wird deutlich, dass die den Führungsbereich 16 definierende Ringwand nicht komplett umlaufend ausgebildet ist, sondern vielmehr aus zwei einander gegenüberliegenden Wandabschnitten gebildet wird. Dies erleichtert die Entformbarkeit eines zur Herstellung des Aggregateträgers 1 verwendeten Gusswerkzeugs.

Weiterhin ist anhand Figur 5c erkennbar, dass vom Betätigungskopf 40 des Befestigungselementes 4 radial nach außen zwei als Anschläge dienende Vorsprünge 49 abstehen, denen wiederum entsprechende Vorsprünge 19 an der Innenwand des Führungsbereiches 16 zugeordnet sind. Die Vorsprünge 19, 49 dienen zur Verdrehsicherung des Befestigungselementes 4, wenn sich dieses in seiner in den Figuren 6a bis 6c gezeigten Befestigungsposition befindet. In der in den Figuren 5a bis 5c gezeigten Montageposition ist das Befestigungselement 4 demgegenüber, wie bereits dargelegt, dadurch gegen unbeabsichtigtes Drehen gesichert, dass dessen im Querschnitt rechteckförmiger Befestigungskopf 45 in die im Querschnitt rechteckförmige, schlitzartige Durchtrittsöffnung 15' des Aggregateträgers 1 eingreift.

Zum Überführen des Befestigungselementes 4 aus der in den Figuren 5a bis 5c gezeigten Montageposition in die in den Figuren 6a bis 6c gezeigte Befestigungsposition, um hierdurch den Aggregateträger 1 an hierfür vorgesehenen Befestigungsstellen B' einer Türinnenhaut I zu befestigen, wird ein geeignetes Werkzeug W mit dem Betätigungskopf 40 des Befestigungselementes 4 in Eingriff gebracht und hiermit eine Kraft in axialer Richtung a ausgeübt.

Durch die Kraftausübung in axialer Richtung a wird zunächst die Rastverbindung 17, 42 (Clipsverbindung) zwischen dem Befestigungselement 4 und dem Führungsbereich 16 gelöst, so dass das Befestigungselement 4 in axialer Richtung a verschoben werden kann, bis es mit seinem Betätigungskopf 40 über eine am Rand der Durchtrittsöffnung 15' anliegende Dichtung D an der zweiten Oberfläche 12 des Aggregateträgers 1 anliegt.

Hierbei durchdringt das Befestigungselement 4 mit seinem Befestigungskopf 45 die in der Türinnenhaut I vorgesehene Befestigungsöffnung B', die ebenso wie die zugehörige Durchtrittsöffnung 15' des Aggregateträgers 1 im Querschnitt rechteckförmig ausgebildet ist und mit dieser im Wesentlichen deckungsgleich ist. Das Befestigungselement 4 ragt dann, wie in Figur 6a dargestellt, mit seinem Befestigungskopf 45 aus der Befestigungsöffnung B' der Türinnenhaut I hinaus.

Durch eine anschließende Drehbewegung des Befestigungselementes 4 (um 180°) wird dessen Betätigungskopf 45 in eine Drehlage überführt, vergleiche Figur 6b, in der er so zu der Befestigungsöffnung B' der Türinnenhaut I orientiert ist, dass er diese nach Art eines Bajonettverschlusses an ihrem Rand übergreift. Hierdurch ist eine formschlüssige Verbindung zwischen Aggregateträger 1 und Türinnenhaut I hergestellt.

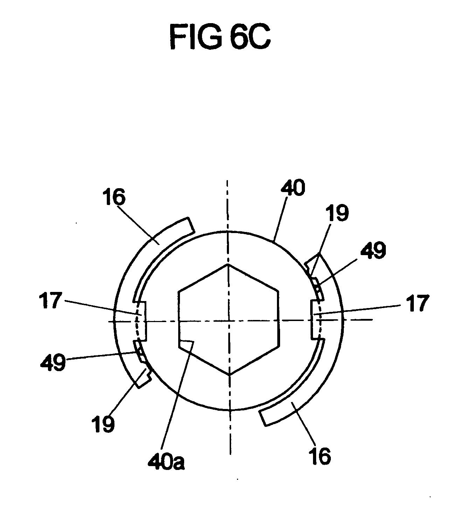

Wie anhand Figur 6c deutlich wird, ist das Befestigungselement 4 in der in Figur 6b dargestellten Drehlage, in der es die zugeordnete Befestigungsöffnung B' an ihrem Rand übergreift, durch die miteinander zusammenwirkenden, Anschläge definierenden Vorsprünge 19, 49 am Führungsbereich 16 einerseits und am Befestigungselement 4 andererseits gesichert. Zumindest ein Teil dieser Vorsprünge 19, 49 ist allerdings derart elastisch ausgebildet, dass bei Einwirkung eines hinreichend großen Drehmomentes auf das Befestigungselement 4 die Drehsicherung aufgehoben werden kann, so dass sich die Verbindung zwischen Aggregateträger 1 und Türinnenhaut I wieder lösen lässt, etwa um den Aggregateträger 1 in einem Reparatur- bzw. Service-Fall aus der Türstruktur ausbauen zu können.

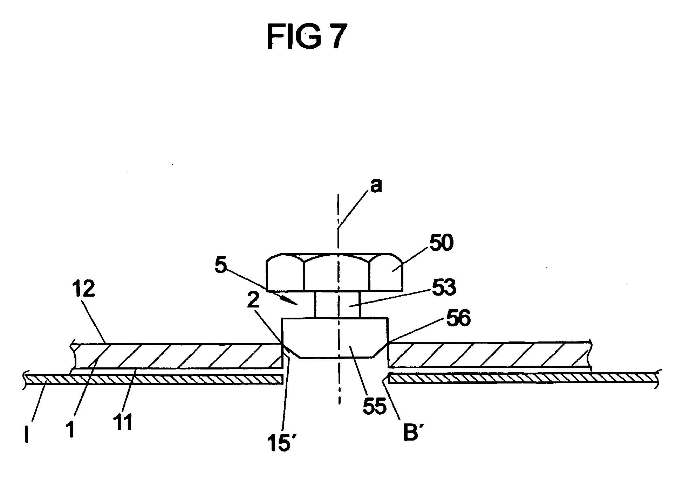

Figur 7 zeigt eine Abwandlung der Anordnung aus den Figuren 5a bis 5c, wobei das in Figur 7 dargestellte Befestigungselement 5 ebenfalls einen Befestigungskopf 55 aufweist, der im Querschnitt rechteckförmig gestaltet ist, der in der in Figur 7 gezeigten Montageposition des Befestigungselementes 5 in eine zugeordnete, ebenfalls im Querschnitt rechteckförmige Durchtrittsöffnung 15' des Aggregateträgers 1 eingreift und der dazu vorgesehen ist, in eine Befestigungsposition überführt zu werden, in der er eine in der Türinnenhaut I vorgesehene, im Querschnitt ebenfalls rechteckförmige und mit der Durchtrittsöffnung 15' im Wesentlichen deckungsgleiche Befestigungsöffnung B' am Rand übergreift.

Im Unterschied zu der Anordnung aus den Figuren 5a bis 5c ist hier jedoch kein Führungsbereich zur Aufnahme des Befestigungselementes 5 vorgesehen, sondern dieses ist vielmehr im Bereich seines Befestigungskopfes 55 einstückig am Rand der Durchtrittsöffnung 15' des Aggregateträgers 1 angeformt (angespritzt). Der Verbindungsbereich, entlang der das Befestigungselement 5 (an dessen Befestigungskopf 55) einstückig mit dem Aggregateträger 1 (am Rand der Durchtrittsöffnung 15') verbunden ist, ist dabei als Sollbruchbereich ausgebildet. D. h., bei einer Betätigung des Befestigungselementes 5 an seinem Betätigungskopf 50 mittels eines zugeordneten Werkzeuges, um das Befestigungselement 5 zunächst in axialer Richtung a zu verschieben, bis dessen Schaft 53 die Durchtrittsöffnung 15' sowie die Befestigungsöffnung B' durchgreift und dessen Befestigungskopf jenseits der Befestigungsöffnung B' liegt, wird die Verbindung zwischen Befestigungselement 5 und Aggregateträger 1 aufgebrochen.

Der Durchgang 2 wird hier also nur durch die Durchtrittsöffnung 15' gebildet.

Nachdem das Befestigungselement 5 in axialer Richtung a so verschoben worden ist, dass dessen Befestigungskopf 55 nicht mehr - wie in der in Figur 7 gezeigten Montageposition - innerhalb der Durchtrittsöffnung 15' des Aggregateträgers 1 liegt, sondern nun vielmehr von der türstrukturseitigen Oberfläche 11 des Aggregateträgers 1 absteht und dabei jenseits der Befestigungsöffnung B' der Türinnenhaut I liegt, wird das Befestigungselement 5, wie oben anhand der Figuren 6a bis 6c beschrieben, um 180° gedreht, so dass ein Bajonettverschluss entsprechend der anhand der Figuren 4a bis 4c erläuterten Art hergestellt ist.

Ein Vorteil der in Figur 7 dargestellten Anordnung gegenüber den in den Figuren 1a bis 6c dargestellten Anordnungen liegt darin, dass nach der Befestigung des Aggregateträgers 1 an der Türinnenhaut I kein von der zweiten Oberfläche 12 des Aggregateträgers 1 abstehender Führungsbereich verbleibt, der eventuell weitere Montagearbeiten behindern könnte.

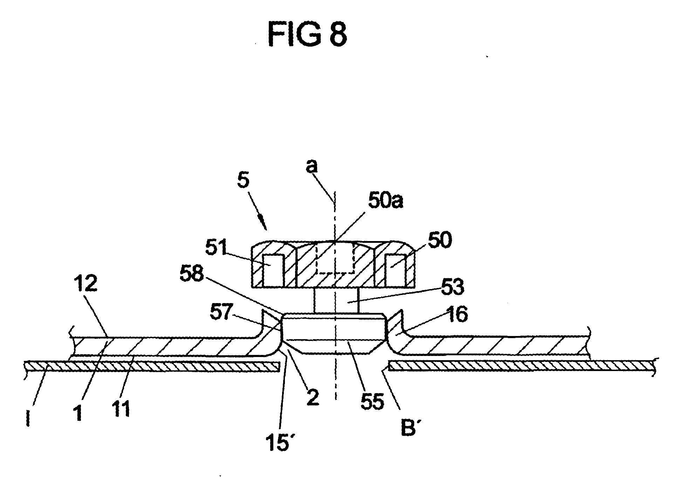

In Figur 8 ist eine Abwandlung des Ausführungsbeispieles aus Figur 7 dargestellt, wobei am Aggregateträger 1 ein mit der Durchtrittsöffnung 15' fluchtender Führungsbereich 16 angeformt ist, der von der zweiten Oberfläche 12 des Aggregateträgers 1 absteht, der sich jedoch in axialer Richtung a nur soweit erstreckt, dass hierin lediglich der zur Herstellung eines Bajonettverschlusses vorgesehene Befestigungskopf 55 des Befestigungselementes 5 aufgenommen werden kann.

Das Befestigungselement 5, das im Übrigen mit dem in Figur 7 dargestellten übereinstimmt, weist hier in seinem Betätigungskopf 50 neben einem Innenmehrkant 50a eine umlaufende Aussparung 51 in Form eines ringförmigen Freischnittes auf, in dem der Führungsbereich 16 des Aggregateträgers 1 aufgenommen wird, wenn das Befestigungselement 5 aus der in Figur 8 gezeigten Montageposition in seine Befestigungsposition überführt worden ist, in der dessen Schaft 53 die Durchtrittsöffnung 15' des Aggregateträgers 1 sowie die Befestigungsöffnung B' der Türinnenhaut I durchgreift und der Befestigungskopf 55 letztere an ihrem Rand hintergreift. Hierdurch steht der Führungsbereich 16 von der zweiten Oberfläche 12 des Aggregateträgers 1 nicht über den ohnehin vorhandenen Betätigungskopf 50 des Betätigungselements 5 hinaus ab.

Zur Halterung des Befestigungselementes 5 am Aggregateträger 1, genauer an dessen Führungsbereich 16, in der in Figur 8 gezeigten Montageposition ist der Befestigungskopf 55 in den Führungsbereich 16 des Aggregateträgers 1 eingepresst, so dass eine reibschlüssige Verbindung zwischen dem Befestigungskopf 55 des Befestigungselementes 5 und der den Führungsbereich 16 bildenden Ringwand vorliegt. Alternativ kann auch eine stoffschlüssige Verbindung, z. B. durch ein Klebemittel oder durch leichtes Anschweißen (mit Ultraschall) vorgesehen sein.

Die Verbindung zwischen dem Befestigungskopf 55 des Befestigungselementes 5 und dem Führungsbereich 16 des Aggregateträgers 1 muss so gestaltet sein, dass bei einer Krafteinwirkung auf das Befestigungselement 5 mit einem geeigneten Werkzeug, um dieses in axialer Richtung a in Richtung auf seine Befestigungsposition zu verschieben, die besagte Verbindung aufgehoben wird.

Der Befestigungskopf 55 ist weiterhin mit einer umlaufenden Phase 58 versehen, die das Verdrehen des Befestigungskopfes 55 um 180° erleichtern soll, während dieser (nach dem axialen Verschieben) über die Phase 55 am Rand der Befestigungsöffnung B' der Türinnenhaut I anliegt.

## Patentansprüche

1. Aggregateträger (1) zum Einbau in eine Türstruktur einer Kraftfahrzeugtür, an dem Funktionskomponenten der Kraftfahrzeugtür vormontierbar sind, so dass der Aggregateträger (1) zusammen mit den Funktionskomponenten als Türmodul in die Türstruktur einbaubar ist, mit
- einer türstrukturseitigen Oberfläche (11) des Aggregateträgers (1), die im eingebauten Zustand des Aggregateträgers (1) der Türstruktur zugewandt ist, und
- am Aggregateträger (1) vorgesehenen Befestigungselementen (3, 4, 5), die von der türstrukturseitigen Oberfläche (11) des Aggregateträgers (1) abstehen und in zugeordnete Befestigungsstellen der Türstruktur eingreifen, wenn der Aggregateträger (1) in die Türstruktur eingebaut ist, so dass der Aggregateträger (1) an der Türstruktur festgelegt ist,
**dadurch gekennzeichnet,**
**dass** die Befestigungselemente (3, 4, 5) vor dem Einbau des Aggregateträgers (1) in die Türstruktur (1) derart in einer Montageposition am Aggregateträger (1) gehalten werden, dass sie nicht von der türstrukturseitigen Oberfläche (11) des Aggregateträgers (1) abstehen, und dass den Befestigungselementen (3, 4, 5) am Aggregateträger (1) jeweils ein Durchgang (2) zugeordnet ist, durch den hindurch die Befestigungselemente (3, 4, 5) in ihre Befestigungsposition bringbar sind, in der sie von der türstrukturseitigen Oberfläche (11) des Aggregateträgers (1) abstehen, wobei auf der der türstrukturseitigen Oberfläche (11) abgewandten zweiten Oberfläche (12) des Aggregateträgers (1) einstückig angeformte Führungsbereiche (16) vorgesehen sind, die zur Aufnahme zumindest eines Abschnittes je eines der Befestigungselemente (3, 4, 5) in seiner Montageposition dienen.

2. Aggregateträger nach Anspruch 1, **dadurch gekennzeichnet, dass** die Halterung eines jeweiligen Befestigungselementes (3, 4, 5) am Aggregateträger (1) durch Krafteinwirkung auf das Befestigungselement (3, 4, 5) aufhebbar ist, um das Befestigungselement (3, 4, 5) in seine Befestigungsposition zu überführen.

3. Aggregateträger nach Anspruch 2, **dadurch gekennzeichnet, dass** die Halterung eines jeweiligen Befestigungselementes (3, 4, 5) am Aggregateträger (1) durch eine Längsbewegung (a) und/oder durch eine Drehbewegung des jeweiligen Befestigungselementes (3, 4, 5) beim Überführen des Befestigungselementes (3, 4, 5) in seine Befestigungsposition aufhebbar ist.

4. Aggregateträger nach Anspruch 2 oder 3, **dadurch gekennzeichnet, dass** das jeweilige Befestigungselement (3, 4) formschlüssig am Rand des zugeordneten Durchganges (2) gehalten wird und dass zum Halten des jeweiligen Befestigungselementes (3, 4) eine Rastverbindung (17, 32; 17, 42) vorgesehen ist, wobei die Rastverbindung (17, 32; 17, 42) zumindest teilweise elastisch ausgebildete Rastmittel umfasst, so dass die Rastverbindung durch Krafteinwirkung auf das jeweilige Befestigungselement (3, 4) zur Überführung des Befestigungselementes (3, 4) in seine Befestigungsposition lösbar ist.

5. Aggregateträger nach Anspruch 2 oder 3, **dadurch gekennzeichnet, dass** das jeweilige Befestigungselement (5) in den Durchgang (2) eingepresst ist und stoffschlüssig am Rand des Durchganges (2) gehalten wird.

6. Aggregateträger nach Anspruch 2 oder 3, **dadurch gekennzeichnet, dass** das jeweilige Befestigungselement (5) einstückig am Rand des Durchganges (2) angeformt ist und über mindestens eine Sollbruchstelle (56) mit dem Rand des Durchganges (2) verbunden ist.

7. Aggregateträger nach Anspruch 1, **dadurch gekennzeichnet, dass** die Führungsbereiche (16) jeweils durch mindestens eine zumindest teilweise ringförmig umlaufende Begrenzungswand gebildet werden, die einen zur Aufnahme des zugeordneten Befestigungselementes (3, 4, 5) vorgesehenen Raum definiert.

8. Aggregateträger nach einem der Ansprüche 1 oder 7, **dadurch gekennzeichnet, dass** am jeweiligen Befestigungselement (5) eine Aussparung (51) zur Aufnahme des Führungsbereiches (16) ausgebildet ist, in der der Führungsbereich (16) zumindest teilweise aufgenommen ist, wenn sich das Befestigungselement (5) in seiner Befestigungsposition befindet.

9. Aggregateträger nach einem der Ansprüche 1, 8 oder 9, **dadurch gekennzeichnet, dass** die Durchgänge (2) des Aggregateträgers (1) durch die Führungsbereiche (16) zusammen mit Durchtrittsöffnungen (15, 15') des Aggregateträgers (1) gebildet werden, die mit jeweils einem der Führungsbereiche (16) fluchten, wobei die Befestigungselemente (3, 4, 5) am jeweils zugeordneten Führungsbereich (16) gehalten werden.

10. Aggregateträger nach einem der Ansprüche 1 bis 9, **dadurch gekennzeichnet, dass** die Befestigungselemente (5) an jeweils einer Durchtrittsöffnung (15') des Aggregateträgers (1) gehalten werden.

11. Aggregateträger nach einem der vorhergehenden Ansprüche, **dadurch gekennzeichnet, dass** die Befestigungselemente (3, 4, 5) ausgebildet sind zum Eingriff in je eine zugeordnete Befestigungsöffnung (B, B') der Türstruktur (I) und dass die Befestigungselemente (3, 4, 5) in ihrer Befestigungsposition die jeweils zugeordnete Befestigungsöffnung (B, B') mit einem Befestigungsabschnitt (35, 45, 55) am Rand übergreifen.

12. Aggregateträger nach Anspruch 11, **dadurch gekennzeichnet, dass** das jeweilige Befestigungselement (3, 4, 5) einen Hinterschnitt (35a) bildet, mit dem es in seiner Befestigungsposition die jeweils zugeordnete Befestigungsöffnung (B, B') am Rand übergreift.

13. Aggregateträger nach einem der vorhergehenden Ansprüche, **dadurch gekennzeichnet, dass** das Befestigungselement (3) als ein aufspreizbares Element ausgebildet ist, das durch ein zugeordnetes Betätigungselement (36, 37) aufspreizbar ist.

14. Aggregateträger nach einem der Ansprüche 1 bis 12, **dadurch gekennzeichnet, dass** die Bewegung, mittels der das Befestigungselement (4, 5) aus seiner Montageposition in seine Befestigungsposition bringbar ist, eine Drehbewegung umfasst.

15. Aggregateträger nach Anspruch 14, **dadurch gekennzeichnet, dass** das jeweilige Befestigungselement (4, 5) zur Bildung eines Bajonettverschlusses ausgebildet ist und dass Mittel zur Verhinderung einer Drehbewegung des jeweiligen Befestigungselementes (4, 5) in seiner Befestigungsposition vorgesehen sind, wobei die Mittel zur Verhinderung einer Drehbewegung des Befestigungselementes (4) einander zugeordnete Anschläge (19, 49) am Rand des Durchganges (2) einerseits und am Befestigungselement (4) andererseits umfassen und ein Teil der Anschläge (19, 49) elastisch ausgebildet ist, so dass die Verdrehsicherung durch Aufbringung eines hinreichend großen Drehmomentes auf das Befestigungselement (4) überwindbar ist, um das Befestigungselement (4) aus seiner Befestigungsposition wieder in seine Montageposition bringen zu können.

## Claims

1. A unit carrier (1) for fitting into a door structure of a motor vehicle door, on which functional components of the motor vehicle door may be premounted, so that the unit carrier (1), together with the functional components, may be fitted as a door module into the door structure, comprising
- a surface (11) of the unit carrier (1) on the door structure side which in the fitted state of the unit carrier (1) faces the door structure, and
- fastening elements (3, 4, 5) provided on the unit carrier (1), which protrude from the surface of the unit carrier on the door structure side and engage in associated fastening points of the door structure, when the unit carrier (1) is fitted into the door structure, so that the unit carrier (1) is secured to the door structure,
**characterized**
**in that** the fastening elements (3, 4, 5) are retained in a mounted position on the unit carrier (1) before fitting the unit carrier (1) into the door structure (I) such that they do not protrude from the surface (11) of the unit carrier (1) on the door structure side, and in that one respective through-passage (2) is associated with the fastening elements (3, 4, 5) on the unit carrier (1), through which the fastening elements (3, 4, 5) may be moved into their fastened position, in which they protrude from the surface (11) of the unit carrier (1) on the door structure side, wherein on the second surface (12) of the unit carrier (1) remote from the surface (11) on the door structure side, integrally formed guide regions (16) are provided, which are used for receiving at least one portion of each of the fastening elements (3, 4, 5) in its mounted position.

2. The unit carrier as claimed in claim 1, **characterized in that** the retention of one respective fastening element (3, 4, 5) on the unit carrier (1) may be canceled by the action of force on the fastening element (3, 4, 5) in order to transfer the fastening element (3, 4, 5) into its fastened position.

3. The unit carrier as claimed in claim 2, **characterized in that** the retention of one respective fastening element (3, 4, 5) on the unit carrier (1) may be canceled by a longitudinal movement (a) and/or by a rotational movement of the respective fastening element (3, 4, 5) when transferring the fastening element (3, 4, 5) into its fastened position.

4. The unit carrier as claimed in claim 2 or 3, **characterized in that** the respective fastening element (3, 4) is positively retained at the edge of the associated through-passage (2) and that a latching connection (17, 32; 17, 42) is provided for retaining the respective fastening element (3, 4), wherein the latching connection (17, 32; 17, 42) comprises latching means configured to be at least partially elastic, so that the latching connection may be released by the action of force on the respective fastening element (3, 4) for transferring the fastening element (3, 4) into its fastened position.

5. The unit carrier as claimed in claim 2 or 3, **characterized in that** the respective fastening element (5) is pressed into the through-passage (2) and is retained by a material connection at the edge of the through-passage (2).

6. The unit carrier as claimed in claim 2 or 3, **characterized in that** the respective fastening element (5) is integrally formed at the edge of the through-passage (2) and is connected via at least one predetermined breaking point (56) to the edge of the through-passage (2).

7. The unit carrier as claimed in claim 1, **characterized in that** the guide regions (16) are respectively formed by at least one, at least partially annular, peripheral defining wall which defines a space provided for receiving the associated fastening element (3, 4, 5).

8. The unit carrier as claimed in one of claims 1 or 7, **characterized in that** on the respective fastening element (5) a recess (51) is configured for receiving the guide region (16), in which the guide region (16) is at least partially received, when the fastening element (5) is in its fastened position.

9. The unit carrier as claimed in one of claims 1, 8 oder 9, **characterized in that** the through-passages (2) of the unit carrier (1) are formed by the guide regions (16) together with through-openings (15, 15') of the unit carrier (1), which are aligned with one respective guide region (16), wherein the fastening elements (3, 4, 5) are respectively retained on the associated guide region (16).

10. The unit carrier as claimed in one of claims 1 to 9, **characterized in that** the fastening elements (5) are retained on one respective through-opening (15') of the unit carrier (1).

11. The unit carrier as claimed in one of the preceding claims, **characterized in that** the fastening elements (3, 4, 5) are configured for engagement in each associated fastening opening (B,B') of the door structure (I) and that the fastening elements (3, 4, 5) overlap in their fastened position the respective associated fastening opening (B, B') with a fastening portion (35, 45, 55) at the edge.

12. The unit carrier as claimed in claim 11, **characterized in that** the respective fastening element (3, 4, 5) forms an undercut (35a) with which it overlaps in its fastened position the respectively associated fastening opening (B, B') at the edge.

13. The unit carrier as claimed in one of the preceding claims, **characterized in that** the fastening element (3) is configured as an expandable element, which may be expanded by an associated actuating element (36, 37).

14. The unit carrier as claimed in one of claims 1 to 12, **characterized in that** the movement by means of which the fastening element (4, 5) may be moved from its mounted position into its fastened position, comprises a rotational movement.

15. The unit carrier as claimed in claim 14, **characterized in that** the respective fastening element (4, 5) is configured to form a bayonet closure and that means are provided for preventing a rotational movement of the respective fastening element (4, 5) in its fastened position, wherein the means for preventing a rotational movement of the fastening element (4) comprise mutually associated stops (19, 49) at the edge of the through-passage (2), on the one hand, and the fastening element (4), on the other hand, and at least one portion of the stops (19, 49) is configured to be elastic, so that by applying a sufficiently large torque on the fastening element (4) the rotational locking may be overcome, in order to be able to move the fastening element (4) once again from its fastened position into its mounted position.

## Revendications

1. Support d'équipement (1) destiné à être intégré dans une structure de portière d'un véhicule automobile, sur lequel il est possible de monter préalablement des composants fonctionnels de la porte de véhicule, de sorte que le support d'équipement (1) peut être intégré dans la structure de porte conjointement avec les composants fonctionnels sous la forme d'un module de porte, comprenant
- une surface (11), côté structure de porte, du support d'équipement (1), laquelle est tournée vers la structure de porte dans la situation intégrée du support d'équipement (1), et
- des éléments de fixation (3, 4, 5) prévus sur le support d'équipement (1), qui dépassent de la surface (11), côté structure de porte, du support d'équipement (1) et qui s'engagent dans des emplacements de fixation associés de la structure de porte quand le support d'équipement (1) est intégré dans la structure de porte, de sorte que le support d'équipement (1) est immobilisé sur la structure de porte,
**caractérisé en ce que**
les éléments de fixation (3, 4, 5) sont maintenus, avant l'intégration du support d'équipement (1) dans la structure de porte (I), dans une position de montage du support d'équipement (1) de telle manière qu'ils ne dépassent pas de la surface (11), côté structure de porte, du support d'équipement (1), et **en ce qu'**une traversée respective (2) est associée aux éléments de fixation (3, 4, 5) sur le support d'équipement (1), à travers laquelle les éléments de fixation (3, 4, 5) peuvent être amenés dans leur position de fixation dans laquelle ils dépassent de la surface (11), côté structure de porte, du support d'équipement (1),
des zones de guidage (16) conformées d'un seul tenant, qui servent à la réception d'au moins un tronçon d'un des éléments de fixation respectif (3, 4, 5) dans sa position de montage étant prévues sur la seconde surface (12), détournée de la surface (11) côté structure de porte, du support d'équipement (1).

2. Support d'équipement selon la revendication 1, **caractérisé en ce que** le montage d'un élément de fixation respectif (3, 4, 5) sur le support d'équipement (1) est annulé par l'action d'une force sur l'élément de fixation (3, 4, 5) afin de faire passer l'élément de fixation (3, 4, 5) dans sa position de fixation.

3. Support d'équipement selon la revendication 2, **caractérisé en ce que** le montage d'un élément de fixation respectif (3, 4, 5) sur le support d'équipement (1) est annulé par un mouvement longitudinal (a) et/ou par un mouvement de rotation de l'élément de fixation respectif (3, 4, 5) lorsqu'on fait passer l'élément de fixation (3, 4, 5) jusque dans sa position de fixation.

4. Support d'équipement selon la revendication 2 ou 3, **caractérisé en ce que** l'élément de fixation respectif (3, 4) est maintenu par coopération de formes à la bordure de la traversée associée (2), et **en ce qu'**il est prévu une liaison à enclenchement (17, 32 ; 17, 42) pour le maintien de l'élément de fixation respectif (3, 4), dans lequel la liaison à enclenchement (17, 32 ; 17, 42) comprend des moyens d'enclenchement réalisés au moins partiellement de manière élastique, de sorte que la liaison à enclenchement peut être annulée par l'application d'une force sur l'élément de fixation respectif (3, 4) afin de faire passer l'élément de fixation (3, 4) jusque dans sa position de fixation.

5. Support d'équipement selon la revendication 2 ou 3, **caractérisé en ce que** l'élément de fixation respectif (5) est engagé à force dans la traversée (2) et est maintenu à la bordure de la traversée (2) par coopération de matières.

6. Support d'équipement selon la revendication 2 ou 3, **caractérisé en ce que** l'élément de fixation respectif (5) est conformé d'un seul tenant à la bordure de la traversée (2) et est relié à la bordure de la traversée (2) par au moins un emplacement de rupture de consigne (56).

7. Support d'équipement selon la revendication 1, **caractérisé en ce que** les zones de guidage (16) sont formées chacune par au moins une paroi de délimitation périphérique au moins partiellement circulaire, qui définit un espace prévu pour la réception de l'élément de fixation associé (3, 4, 5).

8. Support d'équipement selon l'une des revendications 1 ou 7, **caractérisé en ce qu'**une échancrure (51) est formée sur l'élément de fixation respectif (5), pour la réception de la zone de guidage (16) et dans laquelle la zone de guidage (16) est au moins partiellement reçue quand l'élément de fixation (5) se trouve dans sa position de fixation.

9. Support d'équipement selon l'une des revendications 1, 8 ou 9, **caractérisé en ce que** les traversées (2) du support d'équipement (1) sont formées à travers les zones de guidage (16) conjointement avec des ouvertures traversantes (15, 15') du support d'équipement (1) qui sont respectivement alignées avec l'une des zones de guidage (16), et dans lequel les éléments de fixation (3, 4, 5) sont maintenus sur la zone de guidage associée respective (16).

10. Support d'équipement selon l'une des revendications 1 à 9, **caractérisé en ce que** les éléments de fixation (5) sont maintenus sur une ouverture traversante respective (15') du support d'équipement (1).

11. Support d'équipement selon l'une des revendications précédentes, **caractérisé en ce que** les éléments de fixation (3, 4, 5) sont réalisés en vue d'engagement dans une ouverture de fixation associée respective (B, B') de la structure de porte (I), et **en ce que**, dans leur position de fixation, les éléments de fixation (3, 4, 5) coiffent l'ouverture de fixation associée respective (B, B') dans leur position de fixation avec un tronçon de fixation (35, 45, 55) à la bordure.

12. Support d'équipement selon la revendication 11, **caractérisé en ce que** l'élément de fixation respectif (3, 4, 5) forme une contre-dépouille (35a) avec laquelle il coiffe, dans sa position de fixation, l'ouverture de fixation associée respective (B, B') à la bordure.

13. Support d'équipement selon l'une des revendications précédentes, **caractérisé en ce que** l'élément de fixation (3) est réalisé à la manière d'un élément à écartement, qui peut être amené à s'écarter par un élément d'actionnement associé (36, 37).

14. Support d'équipement selon l'une des revendications 1 à 12, **caractérisé en ce que** le mouvement au moyen duquel l'élément de fixation (4, 5) peut être amené depuis sa position de montage jusque dans sa position de fixation, comprend un mouvement circulaire.

15. Support d'équipement selon la revendication 14, **caractérisé en ce que** l'élément de fixation respectif (4, 5) est réalisé pour la formation d'une fermeture à baïonnette, et **en ce qu'**il est prévu des moyens pour empêcher un mouvement de rotation de l'élément de fixation respectif (4, 5) dans sa position de fixation, lesdits moyens pour empêcher un mouvement de rotation de l'élément de fixation (4) comprenant des butées (19, 49) mutuellement associées à la bordure de la traversée (2) d'une part et sur l'élément de fixation (4) d'autre part, et une partie des butées (19, 49) est réalisée de manière élastique de sorte qu'il est possible de surmonter le blocage antirotation en appliquant un couple de rotation suffisamment élevé sur l'élément de fixation (4) pour pouvoir ramener l'élément de fixation (4) depuis sa position de fixation en retour dans sa position de montage.
